# EUROPEAN PATENT SPECIFICATION

(11) **EP 3 973 155 B1**
(45) Date of publication and mention of the grant of the patent: **22.03.2023**
(21) Application number: 20743866.4
(22) Date of filing: 20.05.2020
(51) Int. Cl.: F02B 63/04, F02B 75/32, F01B 9/04

(54) **SIMPLIFIED ENDOTHERMIC ENGINE**
VEREINFACHTER ENDOTHERMER MOTOR
MOTEUR ENDOTHERMIQUE SIMPLIFIÉ

(30) Priority: 22.05.2019 IT 201900007104
(43) Date of publication of application: 30.03.2022
(73) Proprietor: Calaggi S.A.S., 46034 Borgo Virgilio (MN) (IT)
(72) Inventor: CALEFFI, Attilio, 46034 BORGO VIRGILIO (MN) (IT)
(74) Representative: Mari, Marco Giovanni
(86) International application number: PCT/IT2020/050129
(87) International publication number: WO 2020/234911

(56) References cited:
- EP-A1- 2 886 829
- EP-A2- 1 223 316
- DE-C1- 10 201 601
- FR-A1- 2 877 057
- US-A1- 2003 051 679

## Description

### Technical field of application

The invention relates to the technical sector of vehicles with electric-only propulsion.

In detail, the invention relates to a simplified endothermic engine, which can be integrated into vehicles with electric-only propulsion, adapted to produce autonomously the electrical energy needed to charge the batteries normally installed on such vehicles.

### Current art

Document EP 2 886 829 A1 refers to an endothermic engine comprising:
- first and second cylinders with first and second pistons, each provided with fuel and oxidizer inlet valves, combustion gas outlet valves and electric spark plugs for starting combustion of the fuel and oxidizer therein;
- a camshaft, controlling the valves of the cylinders, provided with an electric drive motor.

The driving range of current vehicles with electric-only propulsion (primarily cars) is known to be dependent on the duration of the electric batteries that power the motor and the on-board and control devices, and on the consequent availability in a country of facilities equipped to charge these batteries on board vehicles.

### Presentation of the invention

An object of the invention is to overcome the above-mentioned problem by means of a simplified endothermic engine, preferably powered by natural gas and operating at a constant speed, adapted to be integrated into vehicles with electric-only propulsion in order to produce autonomously and directly on these vehicles the electrical energy needed to charge the electric batteries that drive the motor and the on-board and control devices.

The object of the invention is achieved with a simplified endothermic engine, according to the main independent claim 1.

Further characteristics of the invention are described in the dependent claims.

The simplified endothermic engine subject of the invention offers several important advantages:
- It makes it possible to produce autonomously, and directly on board the vehicle, the electrical energy needed to charge the electric batteries that power the motor, the control and on-board devices of vehicles with electric-only propulsion;
- It makes it possible to obtain a full charge or to maintain a predetermined charge level in said electric batteries;
- It makes it possible to increase the driving range of vehicles with electric-only propulsion and to achieve their independence from the availability of charging stations in the country;
- Its compactness makes it easy to fit on vehicles with electric-only propulsion;
- Its mechanical simplicity makes it highly reliable;
- It creates very little pollution since it is powered by natural gas.

### Short description of drawings

Further characteristics and advantages of the invention will become more evident from the following detailed description, and with the aid of the accompanying drawings, given by way of non-limiting example, showing preferred embodiments of the invention, wherein:

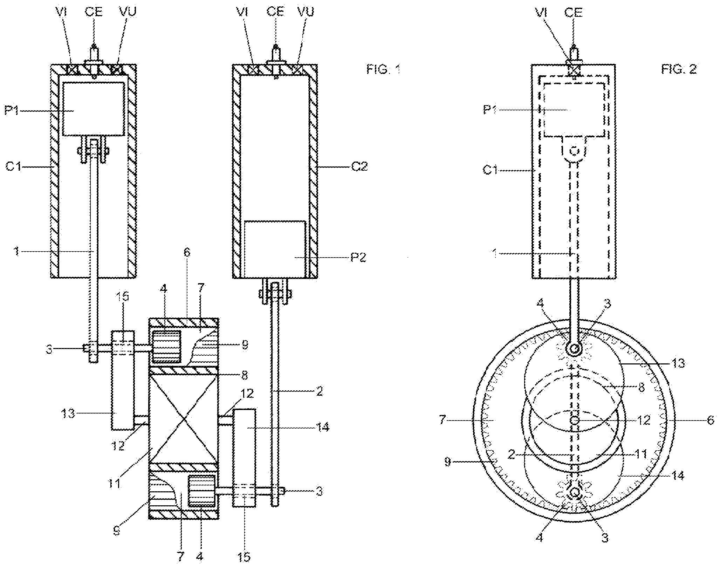

- figures 1-2 show a vertical cross-section view and a side view, respectively, of the schematic structure of a simplified endothermic engine, according to a first variant of the invention;
- figures 3-4 show a vertical cross-section view and a side view, respectively, of two possible variants of an embodiment of said simplified endothermic engine.

### Detailed description of a preferred embodiment of the invention

With reference to the details in the figures, a simplified endothermic engine, according to the invention, comprises:
- first and second cylinders C1, C2 with respective first and second pistons P1, P2, each provided with fuel and oxidizer inlet valves VI, combustion gas outlet valves VU and electric spark plugs CE for starting combustion of the fuel and oxidizer therein;
- a camshaft, controlling the valves VI, VU of the cylinders C1, C2, provided with an electric drive motor (not illustrated);
- first and second connecting rods 1, 2 associated at the top with the pistons P1, P2 of the cylinders C1, C2 and at the bottom provided with movement organs, rotatingly associated thereto by means of rotation shafts 3;
- a static body 6, arranged between connecting rods 1 and 2, acting as a transmission box, incorporating a first cavity 7, with a toroidal shape, adapted to be engaged by the movement organs 4 or 5 of the connecting rods 1, 2 and including a second cavity 8, with a cylindrical shape, arranged concentric to the first, housing an electric generator 11 provided with a drive shaft 12;
- first and second eccentric masses 13, 14, with a discoidal shape, arranged between the static body 6 and the connecting rods 1, 2 and acting as flywheels, rotatingly associated with the shafts 3 of the movement organs 4 or 5 of the connecting rods 1, 2 and in one piece with the shaft 12 of the electric generator 11.

The cylinders C1, C2 comprise a position sensor means (not illustrated), adapted to cooperate with the electric drive motor of the camshaft controlling the valves VI, VU to synchronize the rotation thereof with the contrasting sliding of the pistons P1, P2 inside them, and as a consequence to enable the simplified endothermic engine to operate at a constant speed.

In a preferred embodiment, the movement organs of the connecting rods 1, 2 comprise toothed wheels 4, the static body 6 has a circular transversal cross-section, and the toroidal cavity 7 comprised in the static body 6 has a toothed surface 9 on the inner surface of the larger circumference, and a smooth surface on the opposing face, so as to allow the rotation of the toothed wheels 4 on the respective shafts 3 and their consequent guided sliding along the toothed surface 9 of the toroidal cavity 7 of the static body 6.

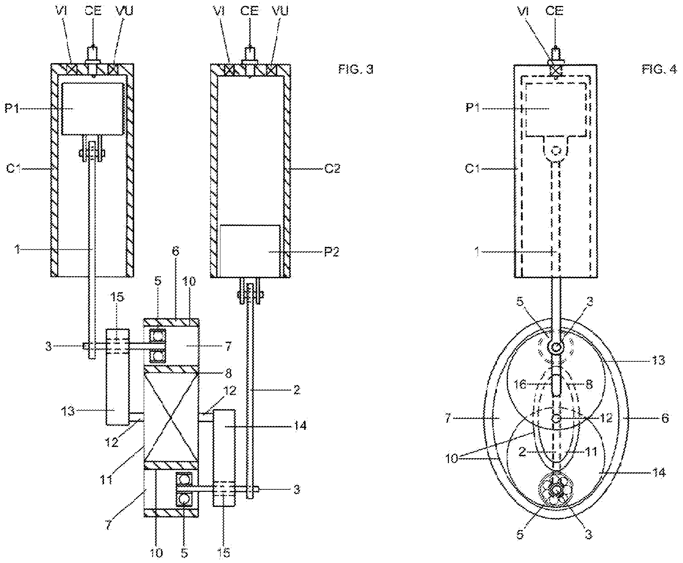

In possible particularly simplified embodiments, such as that shown in figure 3, the movement organs of the connecting rods 1, 2 may comprise ball bearings 5 and the toroidal cavity 7 comprised in the static body 6 may have smooth surfaces 10 on both circumferences, so as to allow the rotation of the ball bearings 5 on the respective shafts 3 and their consequent simple sliding movement between the smooth surfaces 10 of the toroidal cavity 7 of the static body 6.

In other, particularly compact possible embodiments, such as that shown in figure 4, the static body 6 may have an ellipsoidal transversal cross-section, with the long axis arranged vertically, and at least the respective cavity 7 with the same elliptical shape.

The electric generator 11 comprises, for example connected to the stator, an electrical element (not shown), adapted to allow electrical energy to be drawn off to power the electric motor of the camshaft and of the electric spark plugs CE of the cylinders C1, C2 and/or to charge the electric batteries of vehicles with electric-only propulsion directly on board these vehicles. This electrical element therefore enables said electric generator 11 to also act as a starter motor when switching on the simplified endothermic engine.

The eccentric masses 13, 14 have centres of rotation in one piece with the shaft 12 of the electric generator 11 and are placed opposite one another at an angle of 180°, so that each mass has a point belonging to an axis around which the two masses rotate.

With reference to figure 4, the eccentric masses 13, 14 comprise slots 16, for the passage or sliding inside them of the shafts 3 of the movement organs of the connecting rods 1, 2.

The operating principle of a simplified endothermic engine, according to the invention, can be summed up as described below.

The simplified endothermic engine can be integrated into a vehicle with electric-only propulsion exclusively for the production of electrical energy for immediate use or to charge the electric batteries that power the main motor and the control and on-board devices.

The simplified endothermic engine is powered preferably by natural gas, and operates at internal temperatures adapted to limit both the formation of CO₂ and of Nitrous Oxides (NOₓ) and their mixtures, and consequently to limit the emission of pollutants into the atmosphere.

The cylinders C1, C2 cooperate with the respective valves VI, VU and electric spark plugs CE to produce the usual phases of aspiration, compression, combustion and exhaust typical of an endothermic engine, needed to cause the linear sliding in opposite directions of the respective pistons P1, P2 inside the cylinders.

A sensor means (not shown), provided on the cylinders C1, C2, cooperates with the electric motor of the camshaft controlling the valves VI, VU to synchronize the rotation thereof with the contrasting sliding of the pistons P1, P2 and as a consequence to enable the simplified endothermic engine to operate at a lower, constant speed. Alternatively, synchronization of the rotation of said camshaft with the contrasting sliding of the pistons P1, P2 can be achieved by associating said camshaft with an electric motor, of an electronic control type.

The contrasting sliding of the pistons P1, P2 in the cylinders C1, C2 induces a corresponding movement in the connecting rods 1, 2 connected to them which, when transmitted to the toothed wheels 4 by the same connecting rods 1, 2, induces their rotation on the shafts 3 and at the same time sliding on the toothed surface 9 of the toroidal cavity 7 of the static body 6, defining a closed annular route.

Sliding of the toothed wheels 4 on the toothed surface 9 of the toroidal cavity 7 induces the rotation of the eccentric masses 13, 14 between the shafts 3 of the toothed wheels 4 and the shaft 12 of the electric generator 11, thereby causing its activation and the consequent desired production of electrical energy on board the vehicle.

An electric element (not shown), provided on the stator of the electric generator 11, makes it possible to draw off the electric energy produced on-board the vehicle and to then use it to power the electric motor of the camshaft and the electric spark plugs CE of the cylinders C1, C2 and/or to charge the electric batteries that power the main motor and the control and on-board devices. This electric element therefore enables said electric generator 11 to also act as a starter motor when switching on the simplified endothermic engine.

In a possible particularly simplified embodiment, shown in figure 3, the movement organs of the connecting rods 1, 2 may comprise ball bearings 5 and the toroidal cavity 7 comprised in the static body 6 may have smooth surfaces 10 on both circumferences, so as to allow the rotation of the ball bearings 5 on the respective shafts 3 and their consequent sliding between the smooth surfaces 10 of the toroidal cavity 7 of the static body 6, which can be either circular or elliptical in shape.

In another particularly compact possible embodiment, shown in figure 4, the static body 6 may have an ellipsoidal transversal cross-section, with the long axis arranged vertically. In this embodiment, the eccentric masses 13, 14 comprise slots 16 for sliding of the shafts 3 of the movement organs of the connecting rods 1, 2. Said slots 16 will enable the shafts 3 to compensate for the different distances assumed with respect to the shaft 12 of the electric generator 11, during sliding of the movement organs of the connecting rods 1, 2 in the toroidal cavity 7, and will consequently prevent mechanical blocking of the entire simplified endothermic engine.

The text relates to a twin-cylinder engine, but the invention can also be applied to engines with a greater number of cylinders.

## Claims

1. Simplified endothermic engine, comprising:
- first and second cylinders (C1, C2) with first and second pistons (P1, P2), each provided with fuel and oxidizer inlet valves (VI), combustion gas outlet valves (VU) and electric spark plugs (CE) for starting combustion of the fuel and oxidizer therein;
- a camshaft, controlling the valves (VI, VU) of the cylinders (C1, C2), provided with an electric drive motor,
**characterized in that** it comprises:
- first and second connecting rods (1, 2), associated at the top with the pistons (P1, P2) and at the bottom provided with movement organs rotatingly associated thereto by means of rotation shafts (3);
- a static body (6), incorporating a first cavity (7) adapted to be engaged by the movement organs of the connecting rods (1, 2), and a second cavity (8) inside the first cavity, arranged concentric to the first, and housing an electric generator (11) provided with a drive shaft (12);
- first and second eccentric masses (13, 14), rotatingly associated with the shafts (3) of the movement organs of the connecting rods (1, 2) and in one piece with the shaft (12) of the electric generator (11),
where said connecting rods (1, 2), said static body (6) and said eccentric masses (13, 14) cooperate with one another and with the cylinders (C1, C2) to cause activation of the electric generator (11) and the consequent production of electrical energy.

2. Simplified endothermic engine according to claim 1, **characterized in that** the connecting rod (1, 2) movement organs comprise toothed wheels (4) or ball bearings (5).

3. Simplified endothermic engine according to claim 1, **characterized in that** said first cavity (7) has a circular or elliptical toroidal shape.

4. Simplified endothermic engine according to claim 3, **characterized in that** said first cavity (7) of the static body (6) comprises a toothed surface (9) on an inner face of the larger circumference, adapted to cooperate with toothed wheels (4) provided on the connecting rods (1, 2) and a smooth surface on an opposing face.

5. Simplified endothermic engine according to claim 3, **characterized in that** said first cavity (7) of the static body (6) comprises a smooth surface (10) both on the larger circumference and on the smaller circumference, adapted to cooperate with ball bearings (5) provided on the connecting rods (1, 2).

6. Simplified endothermic engine according to claim 1, **characterized in that** the static body (6) has a circular or ellipsoidal cross-section with the long axis arranged vertically.

7. Simplified endothermic engine according to claim 1, **characterized in that** the eccentric masses (13, 14) have centres of rotation in one piece with the shaft (12) of the electric generator (11) and are placed opposite one another at an angle of 180°, so that each mass has a point belonging to an axis around which the mass itself rotates.

8. Simplified endothermic engine according to claim 1, **characterized in that** the eccentric masses (13, 14) comprise openings or slots (15, 16) for the passage or sliding inside them of the shafts (3) of the movement organs (4, 5) of the connecting rods (1, 2).

9. Simplified endothermic engine according to claim 1, **characterized in that** the cylinders (C1, C2) comprise a position sensor means, adapted to cooperate with the electric drive motor of the camshaft to synchronize the rotation thereof with the contrasting sliding of the pistons (P1, P2) and as a consequence to enable the simplified endothermic engine to operate at a constant speed.

10. Simplified endothermic engine according to claim 1, **characterized in that** the electric generator (11) comprises, on the stator, an electrical element adapted to allow electrical energy to be drawn off to power the electric motor of the camshaft and of the electric spark plugs (CE) of the cylinders (C1, C2) and/or to charge the electric batteries of vehicles with electric-only propulsion directly on board these vehicles.

## Patentansprüche

1. Vereinfachter endothermer Motor, umfassend:
- einen ersten und einen zweiten Zylinder (C1, C2) mit einem ersten und einem zweiten Kolben (P1, P2), die jeweils mit Brennstoff- und Oxidationsmittel-Einlassventilen (VI), Verbrennungsgas-Auslassventilen (VU) und elektrischen Zündkerzen (CE) zum Starten der Verbrennung des darin enthaltenen Brennstoffs und des Oxidationsmittels versehen sind;
- eine Nockenwelle, die die Ventile (VI, VU) der Zylinder (C1, C2) steuert und mit einem elektrischen Antriebsmotor ausgestattet ist,
**dadurch gekennzeichnet, dass** er Folgendes enthält:
- erste und zweite Verbindungsstangen (1, 2), die oben mit den Kolben (P1, P2) verbunden sind und unten mit Bewegungsorganen versehen sind, die mit Hilfe von Drehwellen (3) drehbar mit ihnen verbunden sind;
- einen statischen Körper (6), aufnehmend einen ersten Hohlraum (7), der geeignet ist, mit den Bewegungsorganen der Verbindungsstangen (1, 2) in Eingriff zu kommen, und einen zweiten Hohlraum (8) im Inneren des ersten Hohlraums, der konzentrisch zum ersten angeordnet ist und einen mit einer Antriebswelle (12) versehenen elektrischen Generator (11) beherbergt;
- erste und zweite exzentrische Massen (13, 14), die drehbar mit den Wellen (3) der Bewegungsorgane der Verbindungsstangen (1, 2) und einstückig mit der Welle (12) des elektrischen Generators (11) verbunden sind,
wobei besagte Verbindungsstangen (1, 2), besagter statischer Körper (6) und besagte exzentrischen Massen (13, 14) miteinander und mit den Zylindern (C1, C2) zusammenwirken, um die Aktivierung des elektrischen Generators (11) und die daraus resultierende Erzeugung von elektrischer Energie zu verursachen.

2. Vereinfachter endothermer Motor gemäß Anspruch 1, **dadurch gekennzeichnet, dass** die Bewegungsorgane der Verbindungsstange (1, 2) Zahnräder (4) oder Kugellager (5) umfassen.

3. Vereinfachter endothermer Motor gemäß Anspruch 1, **dadurch gekennzeichnet, dass** der besagte erste Hohlraum (7) eine kreisförmige oder elliptische Toroidform aufweist.

4. Vereinfachter endothermer Motor gemäß Anspruch 3, **dadurch gekennzeichnet, dass** der besagte erste Hohlraum (7) des statischen Körpers (6) auf einer Innenseite des größeren Umfangs eine gezahnte Fläche (9), die geeignet ist, mit an den Verbindungsstangen (1, 2) vorgesehenen Zahnrädern (4) zusammenzuwirken, und auf einer gegenüberliegenden Seite eine glatte Fläche umfasst.

5. Vereinfachter endothermer Motor gemäß Anspruch 3, **dadurch gekennzeichnet, dass** der besagte erste Hohlraum (7) des statischen Körpers (6) sowohl am größeren als auch am kleineren Umfang eine glatte Fläche (10) umfasst, die geeignet ist, mit Kugellagern (5) zusammenzuwirken, die an den Verbindungsstangen (1, 2) vorgesehen sind.

6. Vereinfachter endothermer Motor gemäß Anspruch 1, **dadurch gekennzeichnet, dass** der statische Körper (6) einen kreisförmigen oder ellipsoiden Querschnitt mit einer senkrecht angeordneten Längsachse aufweist.

7. Vereinfachter endothermer Motor gemäß Anspruch 1, **dadurch gekennzeichnet, dass** die exzentrischen Massen (13, 14) Drehzentren aufweisen, die mit der Welle (12) des elektrischen Generators (11) einstückig sind und einander gegenüber in einem Winkel von 180° angeordnet sind, so dass jede Masse einen Punkt hat, der zu einer Achse gehört, um die sich die Masse selbst dreht.

8. Vereinfachter endothermer Motor gemäß Anspruch 1, **dadurch gekennzeichnet, dass** die exzentrischen Massen (13, 14) Öffnungen oder Schlitze (15, 16) für den Durchgang oder das Gleiten in ihnen der Wellen (3) der Bewegungsorgane (4, 5) der Verbindungsstangen (1, 2) umfassen.

9. Vereinfachter endothermer Motor gemäß Anspruch 1, **dadurch gekennzeichnet, dass** die Zylinder (C1, C2) ein Positionssensormittel umfassen, das geeignet ist, mit dem elektrischen Antriebsmotor der Nockenwelle zusammenzuwirken, um deren Drehung mit dem gegenläufigen Gleiten der Kolben (P1, P2) zu synchronisieren und infolgedessen den Betrieb des vereinfachten endothermen Motors mit einer konstanten Geschwindigkeit zu ermöglichen.

10. Vereinfachter endothermer Motor gemäß Anspruch 1, **dadurch gekennzeichnet, dass** der elektrische Generator (11) auf dem Stator ein elektrisches Element umfasst, das geeignet ist, um elektrische Energie zum Antrieb des Elektromotors der Nockenwelle und der elektrischen Zündkerzen (CE) der Zylinder (C1, C2) zu entnehmen und/oder um die elektrischen Batterien von Fahrzeugen mit reinem Elektroantrieb direkt an Bord dieser Fahrzeuge aufzuladen.

## Revendications

1. Moteur endothermique simplifié, comprenant :
- des premier et second cylindres (C1, C2) avec des premier et second pistons (P1, P2), chacun étant pourvu de soupapes d'entrée de carburant et de comburant (VI), de soupapes de sortie de gaz de combustion (VU) et de bougies d'allumage électriques (CE) pour démarrer la combustion du carburant et du comburant à l'intérieur ;
- un arbre à cames, commandant les soupapes (VI, VU) des cylindres (C1, C2), muni d'un moteur d'entraînement électrique,
**caractérisé par le fait qu'**il comprend :
- des première et deuxième bielles (1, 2), associées en haut aux pistons (P1, P2) et en bas munies d'organes de mouvement qui leur sont associés en rotation au moyen d'arbres de rotation (3) ;
- un corps statique (6), comprenant une première cavité (7) adaptée pour être engagée par les organes de mouvement des bielles (1, 2), et une seconde cavité (8), disposée concentriquement à la première, et logeant un générateur électrique (11) muni d'un arbre d'entraînement (12) ;
- des première et deuxième masses excentriques (13, 14), associées en rotation aux arbres (3) des organes de déplacement des bielles (1, 2) et solidaires de l'arbre (12) du générateur électrique (11),
où lesdites bielles (1, 2), ledit corps statique (6) et lesdites masses excentriques (13, 14) coopèrent les uns avec les autres et avec les cylindres (C1, C2) pour provoquer l'activation du générateur électrique (11) et la production consécutive d'énergie électrique.

2. Moteur endothermique simplifié selon la revendication 1, **caractérisé par le fait que** les organes de déplacement des bielles (1, 2) comprennent des roues dentées (4) ou des roulements à billes (5).

3. Moteur endothermique simplifié selon la revendication 1, **caractérisé par le fait que** ladite première cavité (7) a une forme toroïdale circulaire ou elliptique.

4. Moteur endothermique simplifié selon la revendication 3, **caractérisé par le fait que** ladite première cavité (7) du corps statique (6) comprend une surface dentée (9) sur une face interne de la plus grande circonférence, adaptée pour coopérer avec des roues dentées (4) prévues sur les bielles (1, 2) et une surface lisse sur une face opposée.

5. Moteur endothermique simplifié selon la revendication 3, **caractérisé par le fait que** ladite première cavité (7) du corps statique (6) comprend une surface lisse (10) à la fois sur la plus grande circonférence et sur la plus petite circonférence, adaptée pour coopérer avec des roulements à billes (5) prévus sur les bielles (1, 2).

6. Moteur endothermique simplifié selon la revendication 1, **caractérisé par le fait que** le corps statique (6) a une section transversale circulaire ou ellipsoïdale avec l'axe long disposé verticalement.

7. Moteur endothermique simplifié selon la revendication 1, **caractérisé par le fait que** les masses excentriques (13, 14) ont des centres de rotation en une seule pièce avec l'arbre (12) du générateur électrique (11) et sont placées en face l'une de l'autre à un angle de 180°, de sorte que chaque masse a un point appartenant à un axe autour duquel la masse elle-même tourne.

8. Moteur endothermique simplifié selon la revendication 1, **caractérisé par le fait que** les masses excentriques (13, 14) comportent des ouvertures ou fentes (15, 16) pour le passage ou le coulissement à l'intérieur de celles-ci des arbres (3) des organes de mouvement (4, 5) des bielles (1, 2).

9. Moteur endothermique simplifié selon la revendication 1, **caractérisé par le fait que** les cylindres (C1, C2) comprennent un moyen de détection de position, adapté pour coopérer avec le moteur d'entraînement électrique de l'arbre à cames pour synchroniser la rotation de celui-ci avec le coulissement opposé des pistons (P1, P2) et par conséquent pour permettre au moteur endothermique simplifié de fonctionner à une vitesse constante.

10. Moteur endothermique simplifié selon la revendication 1, **caractérisé par le fait que** le générateur électrique (11) comprend, sur le stator, un élément électrique adapté pour permettre le prélèvement d'énergie électrique pour alimenter le moteur électrique de l'arbre à cames et des bougies électriques (CE) des cylindres (C1, C2) et/ou pour charger les batteries électriques des véhicules à propulsion uniquement électrique directement à bord de ces véhicules.
